# EUROPEAN PATENT APPLICATION

(11) **EP 4 811 252 A1**
(43) Date of publication of application: **23.09.2026**
(21) Application number: 26165133.5
(22) Date of filing: 16.03.2026
(51) Int. Cl.: G06Q 20/32, G06Q 20/20, G06Q 20/40, G07F 7/08

(54) **PAYMENT METHOD, ELECTRONIC DEVICE, PAYMENT COLLECTION METHOD, AND PAYMENT COLLECTION DEVICE**

(30) Priority: 17.03.2025 CN 202510316650
(71) Applicant: GUANGDONG OPPO MOBILE TELECOMMUNICATIONS CORP., LTD., Dongguan, Guangdong 523860 (CN)
(72) Inventor: CHEN, Huaxing, No.18 Haibin Road Wusha,Chang'an,Dongguan Guangdon, 523860 (CN); LI, Zongyuan, No.18 Haibin Road Wusha,Chang'an,Dongguan Guangdon, 523860 (CN)
(74) Representative: Penza, Giancarlo

(57) **Abstract**

The disclosure provides a payment method, an electronic device, a payment collection method, a payment collection device, and a computer-readable program. The payment method is implemented by the electronic device, and includes operations as follows. In a screen-off mode of the electronic device, a trigger signal sent by a payment collection device is received. A response signal is sent to the payment collection device according to the trigger signal, where the response signal is configured to cause the payment collection device to enter a card emulation mode. The electronic device is controlled, according to the trigger signal, to switch from the screen-off mode to a screen-on mode and enter a reader mode. A polling signal is sent to read tag information of the payment collection device. A payment application is invoked to process a payment according to the tag information. Through the payment method described in the disclosure, the payment problem that trouble users when electronic device is in the screen-off mode can be alleviated.

## Description

### TECHNICAL FIELD

The disclosure relates to the field of inductive interaction technologies, particularly to a payment method, an electronic device, a payment collection method, and a payment collection device.

### BACKGROUND

With technological advancements, electronic devices such as mobile phones are now capable of supporting an increasing number of functions with increasing power. The electronic devices are evolving toward greater diversification and personalization. Near Field Communication (NFC) is a short-range, high-frequency radio technology evolved from the integration of contactless radio frequency identification (RFID) and interconnection technologies, providing electronic devices with a highly secure and efficient communication method. With the use and popularization of electronic devices supporting the NFC function, the NFC technology has been applied in payment and payment collection scenarios. However, in the related art, there are inconveniences when an electronic device such as a mobile phone reads a tag of a payment collection device to process a payment.

### SUMMARY

Some embodiments of the disclosure provide a payment method, an electronic device, a payment collection method, and a payment collection device. The invention is set out in the appended set of claims.

The payment method provided by the embodiments of the disclosure can addresses the inconvenience in the related art that occurs when a user processes a payment with the electronic device in the screen-off state, thereby reducing the inconvenience associated with making payments using the electronic device.

### BRIEF DESCRIPTION OF THE DRAWINGS

In order to more clearly illustrate technical solutions in the embodiments of the disclosure, drawings to be used in the embodiments are briefly described below. Apparently, the following drawings are merely some embodiments of the disclosure, and those skilled in the art can obtain other drawings according to these drawings without paying any creative effort.
FIG. 1 is a flowchart of a payment method according to some embodiments of the disclosure.
FIG. 2 is a schematic diagram illustrating interaction of the payment method illustrated in FIG. 1.
FIG. 3 is a flowchart of the payment method according to some other embodiments of the disclosure.
FIG. 4 is a flowchart of S14 and S15 in the payment method according to some embodiments of the disclosure.
FIG. 5 is a flowchart of S16 in the payment method according to some other embodiments of the disclosure.
FIG. 6 is a flowchart of S17 in the payment method according to yet other embodiments of the disclosure.
FIG. 7 is a schematic diagram of an electronic device according to some embodiments of the disclosure.
FIG. 8 is a schematic diagram of the electronic device according to some other embodiments of the disclosure.
FIG. 9 is a schematic diagram of the electronic device according to yet other embodiments of the disclosure.
FIG. 10 is a flowchart of a payment collection method according to some embodiments of the disclosure.
FIG. 11 is a schematic diagram of S311 included in S310 in FIG. 10.
FIG. 12 is a schematic diagram of S321 included in S320 in FIG. 10.
FIG. 13 is a flowchart of the payment collection method according to some other embodiments of the disclosure.
FIG. 14 is a flowchart of the payment collection method according to yet other embodiments of the disclosure.
FIG. 15 is a schematic diagram illustrating a state of the payment collection device in the payment collection method according to some embodiments.
FIG. 16 is a schematic diagram of a payment collection device according to some embodiments of the disclosure.
FIG. 17 is a schematic diagram of the payment collection device according to some other embodiments of the disclosure.
FIG. 18 is a schematic flowchart illustrating interaction between a payment collection device and an electronic device according to some embodiment of the disclosure.

### DETAILED DESCRIPTION OF PREFERRED EMBODIMENTS

The technical solutions of the disclosure will be described clearly and comprehensively with reference to the drawings. Apparently, the described embodiments in the disclosure are only a part of the embodiments, rather than all of the embodiments. All other embodiments obtained by those skilled in the art based on the embodiments of the disclosure without creative efforts shall fall within the protection scope of the disclosure.

The terms "embodiment" referred to herein means that a particular feature, structure, or characteristic described in conjunction with the embodiment may be contained in at least one embodiment of the disclosure. The term used in various places in the specification does not necessarily refer to the same embodiment, nor does it refer to an independent or alternative embodiment that is mutually exclusive with other embodiments. It is explicitly and implicitly understood by a person skilled in the art that the embodiment described herein may be combined with other embodiments.

The terms "first", "second" and the like used in the specification and the claims of the disclosure and the drawings are used to distinguish different objects rather than describe a particular order. Additionally, the terms "include", "comprise", and "have" as well as variations thereof are intended to cover non-exclusive inclusion. For example, an assembly or device including one or more components is not limited to the listed one or more components, but optionally includes one or more components that are not listed but inherent to the illustrated product, or one or more components that should be included based on the described function.

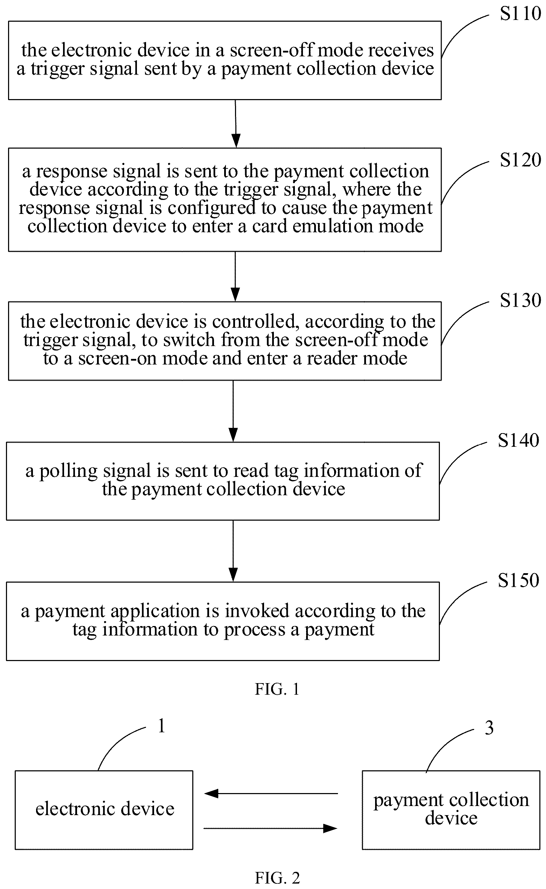

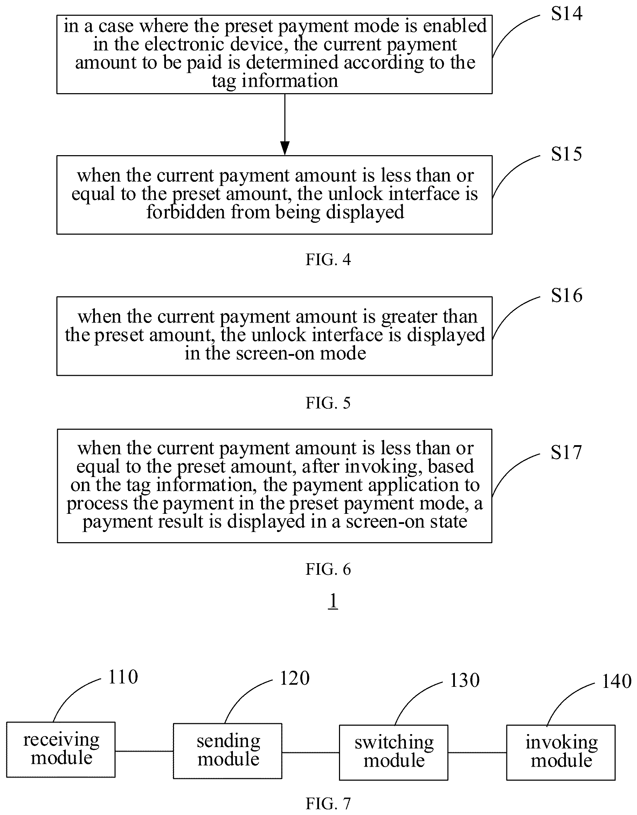

To clearly introduce the payment method and the electronic device 1 (referring to FIG. 2, FIG. 7, etc.) according to the embodiments of the disclosure, the electronic device 1 in the related art is first introduced.

In the related art, the electronic device includes an NFC module, and is capable of communicating with other devices. The electronic device generally supports a reader mode (also called a reader/writer mode, which is referred to simply as the reader mode herein) and a card emulation mode. The reader mode is also called an active mode, and the card emulation mode is also called a passive mode. In other words, the electronic device supports the active mode and the passive mode. When the electronic device is in the reader mode (i.e., the active mode), the electronic device may read information of other device being in the card emulation mode. When the electronic device is in the card emulation mode (i.e., the passive mode), other devices being in the reader mode is capable of reading information of the electronic device. Thus, when the electronic device communicates with another device, in some embodiments, the electronic device is in the reader mode and another device is in the card emulation mode; and in some other embodiments, the another device is in the reader mode and the electronic device is in the card emulation mode.

In addition, the electronic device also supports a screen-off mode (also called a display-off mode or a black-screen mode) and a screen-on mode. Usually, in the related art, when the electronic device is in the screen-off mode, the electronic device is in the passive mode; and when the electronic device is in the screen-on mode, the electronic device is in the active mode.

For example, in the related art, when the electronic device is used in scenarios such as swiping for subway, bus, or access control, the electronic device is in the screen-off mode and the card emulation mode (i.e., the passive mode). When the electronic device is configured to read a tag of a payment collection device, the electronic device needs to be in the screen-on mode and the reader mode (i.e., the active mode). However, for most users, it is difficult to distinguish usage scenarios of the electronic device. When using the electronic device to read the tag of the payment collection device to process a payment, users often mistakenly believe that the electronic device can also be used in the screen-off state. In the related art, users attempt to use the electronic device in the screen-off state to read the tag of the payment collection device to process a payment, but the payment (also called a transaction) cannot be completed. It can be seen that, the related art is inconvenient for users when making payments with the electronic device in the screen-off mode.

A payment method, an electronic device 1, a payment collection method, a payment collection device 3, and other related aspects provided by embodiments of the disclosure are described in details as follows.

Referring to FIG. 1 and FIG. 2, FIG. 1 is a flowchart of a payment method according to some embodiments of the disclosure, and FIG. 2 is a schematic diagram illustrating interaction of the payment method illustrated in FIG. 1. The payment method is implemented by the electronic device 1. The electronic device 1 may be, but is not limited to, a device supporting NFC communication, such as a mobile phone, or a tablet computer. The embodiments of the disclosure are described using the electronic device 1 as a mobile phone for example, which should not be construed as limiting the payment method provided by the embodiments of this disclosure. The payment method includes S110, S120, S130, S140, and S150, which are described in detail as follows.

At S110, the electronic device 1 in a screen-off mode receives a trigger signal sent by a payment collection device 3.

In some embodiments, when the electronic device 1 is in the screen-off mode, the electronic device 1 is also in the card emulation mode.

The trigger signal is a non-standard NFC command. The trigger signal is a user-defined command, and the trigger signal may be one byte or multiple bytes. For example, the trigger signal may be, but is not limited to, 0xA5, as long as the trigger signal is different from standard NFC commands.

When the trigger signal is a standard NFC command, in response to receiving the trigger signal, the electronic device 1 would enter the card emulation mode under the control of the trigger signal. However, in the related art, manufacturers of the payment collection device 3 and manufacturers of various electronic devices 1 do not reach an agreement on business models, business processes, etc. Consequently, the payment cannot be completed when the electronic device 1 is in the card emulation mode and the payment terminal 3 is in the reader mode. For example, the business models between the manufacturer of the payment collection device 3 and the manufacturers of the various electronic device 1 include authorization rights, authorization fees, profit sharing, etc. of the Embedded Secure Element (eSE). The business processes include, but are not limited to, an emulation router configuration of the electronic device 1.

In the payment method provided by the embodiments of the disclosure, the trigger signal is a non-standard NFC command, which prevents the electronic device 1 from being in the card emulation mode under the control of the trigger signal.

The trigger signal may be implemented by an independent NFC chip in the payment collection device 3, or by an integrated chip in the payment collection device 3 that supports both a reader function (also called a reader/writer function, or a card reading function) and a tag function, which is not limited in the disclosure.

When the electronic device 1 interacts with the payment collection device 3 to process a payment to the payment collection device 3, a distance between the electronic device 1 and the payment collection device 3 is less than or equal to a preset distance. For example, the preset distance may be, but is not limited to, 20 centimeters. In some embodiments, when the distance between the electronic device 1 and the payment collection device 3 is less than or equal to the preset distance, the electronic device 1 can receive the trigger signal sent by the payment collection device 3.

In some embodiments, the distance between the electronic device 1 and the payment collection device 3 is zero. For example, when the electronic device 1 is close to the payment collection device 3 and makes contact with the payment collection device 3, the distance between the electronic device 1 and the payment collection device 3 is zero. Regarding the electronic device 1 being close to the payment collection device 3 and making contact with the payment collection device 3, it is also referred to as a touching operation or a tap-to-pay operation between the electronic device 1 and the payment collection device 3.

At S120, a response signal is sent to the payment collection device 3 according to the trigger signal, where the response signal is configured to cause the payment collection device 3 to enter a card emulation mode.

After the electronic device 1 receives the trigger signal, the electronic device 1 feeds back the response signal to the payment collection device 3. The response signal is configured to control the payment collection device 3 to enter the card emulation mode. In other words, the response signal is configured to control the payment collection device 3 to be in the passive mode.

In some embodiments, the trigger signal may be, but is not limited to, 0xA5, and the response signal may be, but is not limited to, 0x05.

At S130, the electronic device 1 is controlled, according to the trigger signal, to switch from the screen-off mode to a screen-on mode and enter a reader mode.

The trigger signal is configured to control the electronic device 1 to switch from the screen-off state to the screen-on state. When the electronic device 1 is in the screen-on state, the electronic device 1 is in the reader mode (also called the active mode). In the embodiments, when the electronic device 1 is in the screen-off mode, the electronic device 1 is in the card emulation mode. In response to receiving the trigger signal, the electronic device 1 is controlled, according to the trigger signal, to switch from the screen-off mode to the screen-on mode, and switch from the card emulation mode to the reader mode.

When the electronic device 1 is in the reader mode and the payment collection device 3 is in the card emulation mode, the electronic device 1 may communicate with the payment collection device 3, and the electronic device 1 may process a payment according to the tag information of the payment collection device 3.

At S140, a polling signal is sent to read tag information of the payment collection device 3.

When the electronic device 1 is in the screen-on mode and the reader mode, the electronic device 1 sends the polling signal. Specifically, the polling signal is an NFC standard command. The polling signal is configured to read the tag information of the payment collection device 3, in which the tag information includes an instruction for invoking a payment application, and information such as an amount to be paid.

At S150, a payment application is invoked to process a payment, according to the tag information.

In response to reading the tag information, the electronic device 1 invokes the payment application according to the tag information, and processes the payment according to the information such as the amount to be paid carried in the tag information.

Based on the above, in the payment method provided by the embodiments of the disclosure, while the electronic device 1 is in the screen-off state, in response to receiving a trigger signal, the electronic device sends the response signal to the payment collection device 3 according to the trigger signal, thereby enabling the payment collection device 3 to enter the card emulation mode according to the response signal. In addition, according to the trigger signal, the electronic device 1 is controlled to switch from the screen-off mode to the screen-on mode, and enter the reader mode. The electronic device 1 in the screen-on mode and the reader mode sends the polling signal to read the tag information of the payment collection device, and invokes the payment application to process the payment, according to the tag information. Thus, through the payment method provided by the embodiments of the disclosure, the payment problem of the related art that troubles users when the electronic device 1 is in the screen-off state can be alleviated, which reduces the inconvenience of making payments with the electronic device 1.

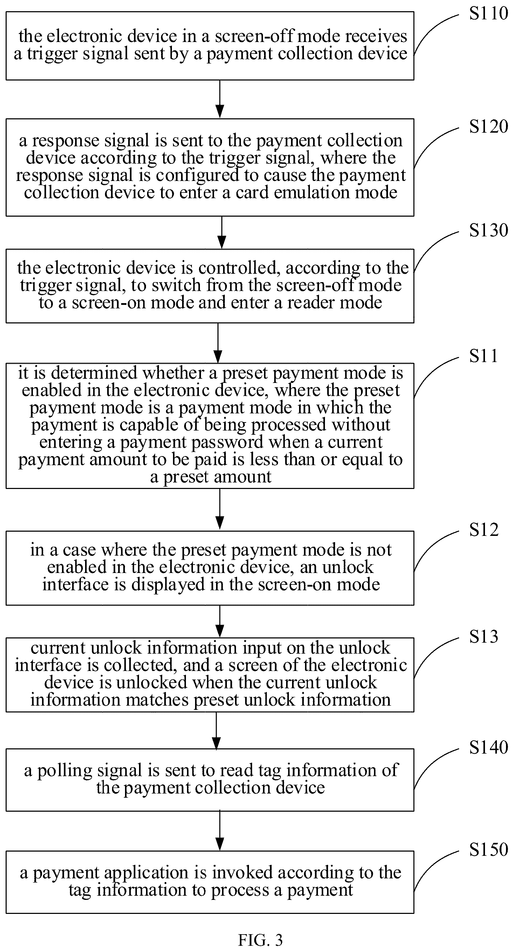

Referring to FIG. 3, FIG. 3 is a flowchart of the payment method according to some other embodiments of the disclosure. Further, between S130 and S140, the payment method further includes S11, S12 and S13. In other words, the payment method includes S110, S120, S130, S11, S12, S13, S140 and S150. For S110, S120, S130, S140 and S150, reference may be made to those described above, and will not be repeated here.

At S11, it is determined whether a preset payment mode is enabled in the electronic device, where the preset payment mode is a payment mode in which the payment is capable of being processed without entering a payment password when a current payment amount to be paid is less than or equal to a preset amount.

The preset amount may be, but is not limited to, 100 RMB, 200 RMB or 500 RMB. When the current amount to be paid is less than or equal to the preset amount, it may be considered as a small payment amount, allowing payment without entering a payment password. Therefore, the preset payment mode may also be called a small-amount password-free payment mode.

At S12, in a case where the preset payment mode is not enabled in the electronic device, an unlock interface is displayed in the screen-on mode.

When the preset payment mode is not enabled in the electronic device, in consideration of the security of payment, the unlock interface is displayed in the screen-on mode.

The unlock interface may be, but is not limited to, a password unlock interface or a biometric information unlock interface. The biometric information unlock interface may be, but is not limited to, a fingerprint unlock interface, a palm print unlock interface or an iris unlock interface.

At S13, current unlock information input on the unlock interface is collected, and a screen of the electronic device is unlocked when the current unlock information matches preset unlock information.

In some embodiments, in a case where the unlock interface is a password unlock interface, the preset unlock information includes multiple symbols, which may be, but is not limited to, at least one of numbers and letters. Accordingly, when each symbol in the current unlock information is the same as the corresponding symbol in the preset unlock information, it is determined that the current unlock information matches the preset unlock information.

In a case where the unlock interface is a biometric information unlock interface, when a matching degree between the current unlock information and the preset unlock information is greater than or equal to a preset matching degree, it is determined that the current unlock information matches the preset unlock information. For example, the preset matching degree may be, but is not limited to, 90% or 95%.

Based on the above, in the payment method provided by the embodiments, when the preset payment mode is not enabled in the electronic device 1, the unlock interface is displayed in the screen-on mode, and the current unlock information input on the unlock interface is collected; when the current unlock information matches the preset unlock information, the screen of the electronic device 1 is unlocked, and then the process proceeds to S140 to send the polling signal to read the tag information of the payment collection device 3, and then to S150 to invoke the payment application to process the payment according to the tag information. This ensures the security of payments processed by the electronic device 1.

Referring to FIG. 4, FIG. 4 is a flowchart of S14 and S15 in the payment method according to some embodiments of the disclosure. In addition, the payment method further includes S14 and S15, which are described in detail as follows.

At S14, in a case where the preset payment mode is enabled in the electronic device, the current payment amount to be paid is determined according to the tag information.

At S15, when the current payment amount is less than or equal to the preset amount, the unlock interface is forbidden from being displayed.

When the electronic device 1 has enabled the preset payment mode, it indicates that the small-amount password-free payment is enabled in the electronic device 1. The current payment amount to be paid is determined according to the tag information, and the current payment amount is compared with the preset amount. When the current payment amount is less than or equal to the preset amount, it indicates that the current payment amount is small, and no payment password needs to be entered, thus prohibiting the display of the unlock interface.

When the current payment amount is less than or equal to the preset amount, the display of the unlock interface is prohibited. After S15, the process proceeds to S140 to send the polling signal to read the tag information of the payment collection device 3, and then to S150 to invoke the payment application to process a payment according to the tag information. As such, in the payment method provided by the embodiments of the disclosure, the payment can be processed without calling up the unlock interface when the preset payment mode is enabled and the current amount to be paid is less than or equal to the preset amount. This can ensure the convenience of payment processed by the electronic device 1 in a payment scenario where the payment amount is less than or equal to the preset amount.

Referring to FIG. 5, FIG. 5 is a flowchart of S16 in the payment method according to some other embodiments of the disclosure. In addition, the payment method further includes S16 described in detail as follows.

At S16, when the current payment amount is greater than the preset amount, the unlock interface is displayed in the screen-on mode.

After executing S16, the process proceeds to S13 to collect the current unlock information input on the unlock interface, and unlock the screen of the electronic device when the current unlock information matches preset unlock information.

When the current payment amount is greater than the preset amount, it indicates that the payment amount is relatively large, and the unlock interface is displayed in the screen-on mode.

In some embodiments, in a case where the unlock interface is a password unlock interface, the preset unlock information includes multiple symbols, which may be, but is not limited to, at least one of numbers and letters. Accordingly, when each symbol in the current unlock information is the same as the corresponding symbol in the preset unlock information, it is determined that the current unlock information matches the preset unlock information.

In a case where the unlock interface is a biometric information unlock interface, when a matching degree between the current unlock information and the preset unlock information is greater than or equal to a preset matching degree, it is determined that the current unlock information matches the preset unlock information. For example, the preset matching degree may be, but is not limited to, 90% or 95%.

Based on the above, in the payment method provided by the embodiments, in a case where the preset payment mode is enabled in the electronic device 1, when the current payment amount is greater than the preset amount, the unlock interface is displayed in the screen-on mode, and the current unlock information input on the unlock interface is collected; when the current unlock information matches the preset unlock information, the screen of the electronic device 1 is unlocked, and then the process proceeds to S140 to send the polling signal to read the tag information of the payment collection device 3, and then to S150 to invoke the payment application to process the payment according to the tag information. This ensures the security of the payment processed by the electronic device 1 when the current payment amount is greater than the preset amount.

Referring to FIG. 6, FIG. 6 is a flowchart of S17 in the payment method according to yet other embodiments of the disclosure. In addition, in the embodiments, the payment method further includes S17 described in detail as follows.

At S17, when the current payment amount is less than or equal to the preset amount, after invoking, based on the tag information, the payment application to process the payment in the preset payment mode, a payment result is displayed in a screen-on state.

In the embodiments, when the current payment amount is less than or equal to the preset amount, there is no need to enter the password, the payment application is invoked to process the payment according to the tag information, and the payment result is displayed in the screen-on state. The payment result may be delivered via short message service, multimedia messaging service, etc.

In the payment method provided by the embodiments of the disclosure, after invoking the payment application to process the payment based on the tag information in the preset payment mode when the current payment amount is less than or equal to the preset amount, the payment result may be displayed in the screen-on state, so as to remind the user of the payment result and facilitate the user to know the payment result.

The electronic device 1 provided by the embodiments of the disclosure will be described as follows. The aforementioned payment method is implemented by the electronic device 1 provided by the embodiments of the present disclosure; correspondingly, the electronic device 1 may complete the payment method provided by the aforementioned embodiments.

Referring to FIG. 7, FIG. 7 is a schematic diagram of an electronic device according to some embodiments of the disclosure. The electronic device 1 may be, but is not limited to, a device supporting NFC communication, such as a mobile phone, or a tablet computer. The electronic device 1 includes a receiving module 110, a sending module 120, a switching module 130 and an invoking module 140. The receiving module 110 is configured to receive a trigger signal sent by a payment collection device, in a screen-off mode of the electronic device 1. The sending module 120 is configured to send a response signal to the payment collection device according to the trigger signal, where the response signal is configured to cause the payment collection device to enter a card emulation mode. The switching module 130 is configured to control, according to the trigger signal, the electronic device 1 to switch from the screen-off mode to a screen-on mode and enter a reader mode. The sending module 120 is further configured to send a polling signal to read tag information of the payment collection device 3. The invoking module 140 is configured to invoke a payment application to process a payment according to the tag information.

In some embodiments, when the electronic device 1 is in the screen-off mode, the electronic device 1 is also in the card emulation mode.

The trigger signal is a non-standard NFC command. The trigger signal is a user-defined command, and the trigger signal may be one byte or multiple bytes. For example, the trigger signal may be, but is not limited to, 0xA5, as long as the trigger signal is different from standard NFC commands.

When the trigger signal is a standard NFC command, in response to the receiving module 110 of the electronic device 1 receiving the trigger signal, the electronic device 1 would enter the card emulation mode under the control of the trigger signal. The trigger signal is a non-standard NFC command, so that the electronic device 1 can be prevented from being in the card emulation mode under the control of the trigger signal.

The trigger signal may be implemented by an independent NFC chip in the payment collection device 3, or by an integrated chip in the payment collection device 3 that supports both the reader function and the tag function, which is not limited in the disclosure.

When the electronic device 1 interacts with the payment collection device 3 to process a payment to the payment collection device 3, a distance between the electronic device 1 and the payment collection device 3 is less than or equal to a preset distance. For example, the preset distance may be, but is not limited to, 20 centimeters. In some embodiments, when the distance between the electronic device 1 and the payment collection device 3 is less than or equal to the preset distance, the receiving module 110 of the electronic device 1 can receive the trigger signal sent by the payment collection device 3.

In some embodiments, the distance between the electronic device 1 and the payment collection device 3 is zero. For example, when the electronic device 1 is close to the payment collection device 3 and makes contact with the payment collection device 3, the distance between the electronic device 1 and the payment collection device 3 is zero. Regarding the electronic device 1 being close to the payment collection device 3 and making contact with the payment collection device 3, it is also referred to as a touching operation or a tap-to-pay operation between the electronic device 1 and the payment collection device 3.

In some embodiments, the receiving module 110 may be, but is not limited to, a Near Field Communication (NFC) antenna.

After the receiving module 110 of the electronic device 1 receives the trigger signal, the sending module 120 is configured to feed back a response signal to the payment collection device 3 according to the trigger signal. The response signal is configured to control the payment collection device 3 to enter the card emulation mode. In other words, the response signal is configured to control the payment collection device 3 to be in the passive mode.

In some embodiments, the trigger signal may be, but is not limited to, 0xA5, and the response signal may be, but is not limited to, 0x05.

The trigger signal is configured to control the electronic device 1 to switch from the screen-off state to the screen-on state. When the electronic device 1 is in the screen-on state, the electronic device 1 is in the reader mode (also called the active mode). In the embodiments, when the electronic device 1 is in the screen-off mode, the electronic device 1 is in the card emulation mode. In response to receiving the trigger signal, the electronic device 1 is controlled, according to the trigger signal, to switch from the screen-off mode to the screen-on mode, and switch from the card emulation mode to the reader mode.

When the electronic device 1 is in the reader mode and the payment collection device 3 is in the card emulation mode, the electronic device 1 may communicate with the payment collection device 3, and the electronic device 1 may process a payment according to the tag information of the payment collection device 3.

The sending module 120 is configured to send the polling signal, when the electronic device 1 is in the screen-on mode and the reader mode. Specifically, the polling signal is an NFC standard command. The polling signal is configured to read the tag information of the payment collection device 3, in which the tag information includes an instruction for invoking a payment application, and information such as an amount to be paid.

In response to reading the tag information, the invoking module 140 of the electronic device 1 is configured to invoke the payment application according to the tag information, and process the payment according to the information such as the amount to be paid carried in the tag information.

Based on the above, in the electronic device 1 provided by the embodiments of the disclosure, the receiving module 110 is configured to receive the trigger signal in the screen-off mode of the electronic device 1. The sending module 120 is configured to send the response signal to the payment collection device 3 according to the trigger signal, where the response signal is configured to cause the payment collection device 3 to enter the card emulation mode. The switching module 130 is configured to control, according to the trigger signal, the electronic device 1 to switch from the screen-off mode to the screen-on mode and enter the reader mode. The sending module 120 is further configured to send the polling signal to read the tag information of the payment collection device 3, when the electronic device 1 is in the screen-on mode and the reader mode. The invoking module 140 is configured to invoke the payment application to process the payment according to the tag information. Thus, through the electronic device 1 provided by the embodiments of the disclosure, the payment problem of the related art that troubles users when the electronic device 1 is in the screen-off state can be alleviated, which reduces the inconvenience of making payments with the electronic device 1.

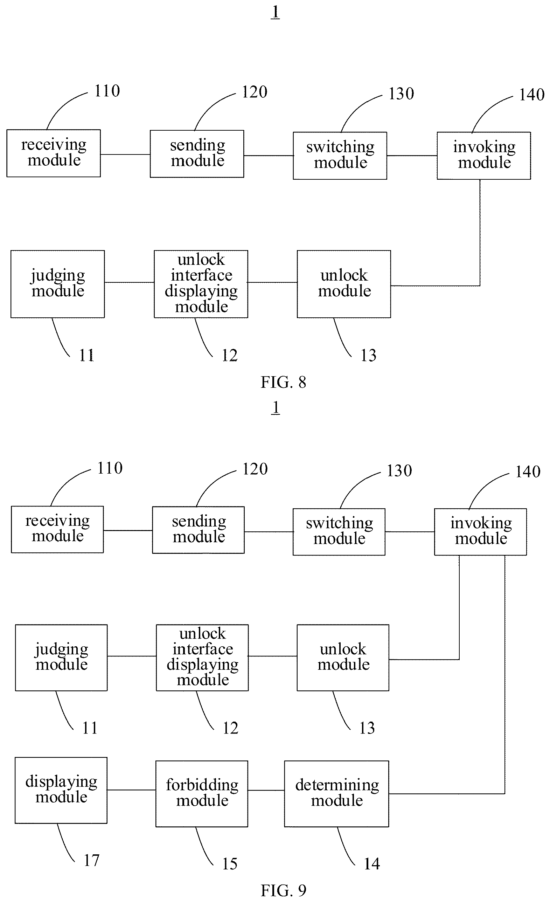

Referring to FIG. 8, FIG. 8 is a schematic diagram of the electronic device according to some other embodiments of the disclosure. In the embodiments, in addition to the receiving module 110, the sending module 120, the switching module 130 and the invoking module 140, the electronic device 1 further includes a judging module 11, an unlock interface displaying module 12 and an unlock module 13. For the receiving module 110, the sending module 120, the switching module 130 and the invoking module 140, reference is made to the above description and will not be repeated here. The judging module 11 is configured to determine whether a preset payment mode is enabled in the electronic device, where the preset payment mode is a payment mode in which the payment is capable of being processed without entering a payment password when a current payment amount to be paid is less than or equal to a preset amount. The unlock interface displaying module 12 is configured to display an unlock interface in the screen-on mode when the preset payment mode is not enabled in the electronic device. The unlock module 13 is configured to collect current unlock information input on the unlock interface, and unlock the screen of the electronic device 1 when the current unlock information matches preset unlock information. The invoking module 140 is configured to invoke the payment application to process the payment according to the tag information, after the screen of the electronic device 1 is unlocked.

The preset amount may be, but is not limited to, 100 RMB, 200 RMB or 500 RMB. When the current amount to be paid is less than or equal to the preset amount, it may be considered as a small payment amount, allowing payment without entering a payment password. Therefore, the preset payment mode may also be called a small-amount password-free payment mode.

In consideration of the security of payment, the unlock interface displaying module 12 is configured to display the unlock interface in the screen-on mode, in a case where the preset payment mode is not enabled in the electronic device 1.

The unlock interface may be, but is not limited to, a password unlock interface or a biometric information unlock interface. The biometric information unlock interface may be, but is not limited to, a fingerprint unlock interface, a palm print unlock interface or an iris unlock interface.

In some embodiments, in a case where the unlock interface is a password unlock interface, the preset unlock information includes multiple symbols, which may be, but is not limited to, at least one of numbers and letters. Accordingly, when each symbol in the current unlock information is the same as the corresponding symbol in the preset unlock information, it is determined that the current unlock information matches the preset unlock information.

In a case where the unlock interface is a biometric information unlock interface, when a matching degree between the current unlock information and the preset unlock information is greater than or equal to a preset matching degree, it is determined that the current unlock information matches the preset unlock information. For example, the preset matching degree may be, but is not limited to, 90% or 95%.

Based on the above, in the electronic device 1, the unlock interface displaying module 12 is configured to display the unlock interface in the screen-on mode, in a case where the preset payment mode is not enabled in the electronic device. The receiving module 110 is configured to collect current unlock information input on the unlock interface, and unlock the screen of the electronic device when the current unlock information matches preset unlock information. Then, the sending module 120 is configured to send the polling signal to read the tag information of the payment collection device 3. The invoking module 140 is configured to invoke the payment application to process the payment according to the tag information. As such, the security of payments processed by the electronic device 1 is ensured.

Referring to FIG. 9, FIG. 9 is a schematic diagram of the electronic device according to yet other embodiments of the disclosure. In the embodiments, the electronic device 1 further includes a determining module 14 and a forbidding module 15. The determining module 14 is configured to determine, according to the tag information, the current payment amount to be paid, in a case where the preset payment mode is enabled in the electronic device. The forbidding module 15 is configured to forbid displaying the unlock interface, when the current payment amount is less than or equal to the preset amount.

When the electronic device 1 has enabled the preset payment mode, it indicates that the small-amount password-free payment is enabled in the electronic device 1. The determining module 14 is configured to determine the current payment amount to be paid according to the tag information, and compare the current payment amount with the preset amount. When the current payment amount is less than or equal to the preset amount, it indicates that the current payment amount is small, and no payment password needs to be entered, thus the forbidding module 15 forbids displaying the unlock interface.

When the current payment amount is less than or equal to the preset amount, the forbidding module 15 is configured to forbid the display of the unlock interface. In a case where the unlock interface is forbidden from being displayed by the forbidding module 15, the sending module is configured to send the polling signal to read the tag information of the payment collection device 3, and the invoking module 140 is configured to invoke the payment application to process the payment according to the tag information. As such, the electronic device 1 provided by the embodiments of the disclosure can complete the payment without displaying the unlock interface, when the preset payment mode is enabled and the current amount to be paid is less than or equal to the preset amount. This can ensure the convenience of payment processed by the electronic device 1 in a payment scenario where the payment amount is less than or equal to the preset amount.

In addition, in some embodiments, the unlock interface displaying module 12 is further configured to display the unlock interface in the screen-on mode, when the current payment amount is greater than the preset amount.

When the current payment amount is greater than the preset amount, it indicates that the payment amount is relatively large, and the unlock interface displaying module 12 is configured to display the unlock interface in the screen-on mode.

In some embodiments, in a case where the unlock interface is a password unlock interface, the preset unlock information includes multiple symbols, which may be, but is not limited to, at least one of numbers and letters. Accordingly, when each symbol in the current unlock information is the same as the corresponding symbol in the preset unlock information, it is determined that the current unlock information matches the preset unlock information.

In a case where the unlock interface is a biometric information unlock interface, when a matching degree between the current unlock information and the preset unlock information is greater than or equal to a preset matching degree, it is determined that the current unlock information matches the preset unlock information. For example, the preset matching degree may be, but is not limited to, 90% or 95%.

In the embodiments, the unlock interface displaying module 12 is configured to display the unlock interface in the screen-on mode, when the current payment amount is greater than the preset amount. Then, the unlock module 13 is configured to collect current unlock information input on the unlock interface, and unlock the screen of the electronic device 1 when the current unlock information matches preset unlock information. The invoking module 140 is configured to invoke the payment application to process the payment according to the tag information, after the screen of the electronic device 1 is unlocked.

Based on the above, in the electronic device 1 provided by the embodiments, the unlock interface displaying module 12 is configured to display the unlock interface in the screen-on mode, in a case where the preset payment mode is enabled in the electronic device 1 and the current payment amount is greater than the preset amount. The unlock module 13 is configured to collect the current unlock information input on the unlock interface, and unlock the screen of the electronic device 1 when the current unlock information matches the preset unlock information. The sending module 120 is configured to send the polling signal to read the tag information of the payment collection device 3. The invoking module 140 is configured to invoke the payment application to process the payment according to the tag information. This ensures the security of the payment processed by the electronic device 1 when the current payment amount is greater than the preset amount.

Continuing to refer to FIG. 9, in the embodiments, the electronic device 1 further includes a displaying module 17. In a case where the current payment amount is less than or equal to the preset amount, the displaying module 17 is configured to display a payment result in a screen-on state, after invoking, based on the tag information, the payment application to process the payment in the preset payment mode.

In the embodiments, when the current payment amount is less than or equal to the preset amount, there is no need to enter the password, the payment application is invoked to process the payment according to the tag information, and the displaying module 17 is configured to display the payment result in the screen-on state. The payment result may be delivered via short message service, multimedia messaging service, etc.

According to the embodiments of the disclosure, after invoking the payment application to process the payment based on the tag information in the preset payment mode when the current payment amount is less than or equal to the preset amount, the electronic device 1 may display the payment result in the screen-on state, so as to remind the user of the payment result and facilitate the user to know the payment result.

Furthermore, the embodiments of the disclosure further provide a computer-readable medium. The computer-readable medium is configured to store a computer program which, when being executed, cause the payment method according to any one of the aforementioned embodiments to be implemented.

The computer-readable medium may be, but is not limited to, a USB flash drive, a Read-Only Memory (ROM), a Random Access Memory (RAM), a mobile hard disk, a magnetic disk or an optical disk and other various media that can store program codes.

The embodiments of the disclosure further provide a payment collection method. The payment collection method is implemented by the payment collection device 3. The payment collection device 3 may be, but is not limited to, an NFC payment collection device 3. The payment collection method provided by the embodiments of the disclosure will be described in detail as follows.

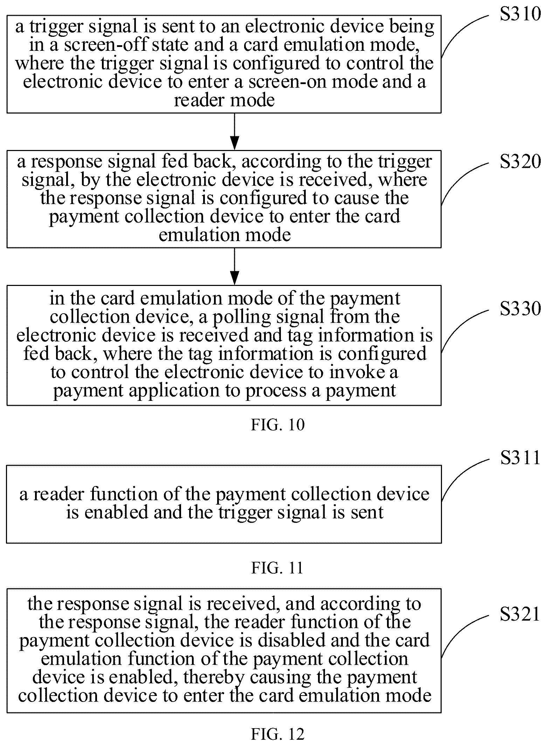

Referring to FIG. 10, FIG. 10 is a flowchart of a payment collection method according to some embodiments of the disclosure. The payment collection method includes S310, S320 and S330, which are described in detail below.

At S310, a trigger signal is sent to an electronic device 1 being in a screen-off state and a card emulation mode 1, where the trigger signal is configured to control the electronic device 1 to enter a screen-on mode and a reader mode.

The trigger signal is sent when the payment collection device 3 is in the reader mode. The trigger signal is a non-standard NFC command. The trigger signal is a user-defined command, and the trigger signal may be one byte or multiple bytes. For example, the trigger signal may be, but is not limited to, 0xA5, as long as the trigger signal is different from standard NFC commands.

When the electronic device 1 is in the screen-off mode, the electronic device 1 is also in the card emulation mode. Since the electronic device 1 is in the card emulation mode and the payment collection device 3 is in the reader mode, the payment collection device 3 may send the trigger signal and the electronic device 1 may receive the trigger signal.

The trigger signal may be implemented by an independent NFC chip in the payment collection device 3, or by an integrated chip in the payment collection device 3 that supports both the reader function and the tag function, which is not limited in the disclosure.

When the electronic device 1 interacts with the payment collection device 3 to process a payment to the payment collection device 3, a distance between the electronic device 1 and the payment collection device 3 is less than or equal to a preset distance. For example, the preset distance may be, but is not limited to, 20 centimeters. In some embodiments, when the distance between the electronic device 1 and the payment collection device 3 is less than or equal to the preset distance, the electronic device 1 can receive the trigger signal sent by the payment collection device 3.

In some embodiments, the distance between the electronic device 1 and the payment collection device 3 is zero. For example, when the electronic device 1 is close to the payment collection device 3 and makes contact with the payment collection device 3, the distance between the electronic device 1 and the payment collection device 3 is zero. Regarding the electronic device 1 being close to the payment collection device 3 and making contact with the payment collection device 3, it is also referred to as a touching operation or a tap-to-pay operation between the electronic device 1 and the payment collection device 3.

At S320, a response signal fed back, according to the trigger signal, by the electronic device is received, where the response signal is configured to cause the payment collection device 3 to enter the card emulation mode.

In the embodiments, when the electronic device 1 is in the screen-off mode, the electronic device 1 is in the card emulation mode. In response to receiving the trigger signal, the electronic device 1 is controlled, according to the trigger signal, to switch from the screen-off mode to the screen-on mode, and switch from the card emulation mode to the reader mode. When the electronic device 1 is in the reader mode, the electronic device 1 sends the response signal according to the trigger signal. The payment collection device 3 receives the response signal from the electronic device 1, where the response signal is fed back by the electronic device 1 according to the trigger signal, and the response signal is configured to enable the card emulation mode of the payment collection device 3.

When the electronic device 1 is in the reader mode and the payment collection device 3 is in the card emulation mode, the electronic device 1 may communicate with the payment collection device 3, and the electronic device 1 may process a payment according to the tag information of the payment collection device 3.

In some embodiments, the trigger signal may be, but is not limited to, 0xA5, and the response signal may be, but is not limited to, 0x05.

At S330, in the card emulation mode of the payment collection device 3, a polling signal from the electronic device 1 is received and tag information is fed back, where the tag information is configured to control the electronic device 1 to invoke a payment application to process a payment.

When the electronic device 1 is in the screen-on mode and the reader mode, the electronic device 1 sends the polling signal. Correspondingly, the payment collection device 3 in the card emulation mode receives the polling signal from the electronic device 1. The polling signal is an NFC standard command. The polling signal is configured to read the tag information of the payment collection device 3, in which the tag information includes an instruction for invoking a payment application, and information such as an amount to be paid.

The tag information is configured to control the electronic device 1 to invoke the payment application for payment. In other words, in response to reading the tag information, the electronic device 1 invokes the payment application according to the tag information, and processes a payment according to the payment amount and other information carried in the tag information.

Based on the above, in the payment collection method provided by the embodiments of the disclosure, the trigger signal is sent to the electronic device 1 that is in the screen-off state and the card emulation mode, where the trigger signal is configured to control the electronic device 1 to enter the screen-on mode and the reader mode; the response signal fed back, according to the trigger signal, by the electronic device 1 in the screen-on mode and reader mode is received, where the response signal is configured to cause the payment collection device 3 to enter the card emulation mode; and the payment collection device 3 in the card emulation mode receives the polling signal from the electronic device 1 and feeds back the tag information, where the tag information is configured to control the electronic device 1 to invoke the payment application for making a payment. It can be seen that, through the payment collection method provided by the embodiments of the disclosure, the payment problem of the related art that troubles users when the electronic device 1 is in the screen-off state can be alleviated, which reduces the inconvenience of making payments with the electronic device 1.

Referring to FIGS. 11 and 12, FIG. 11 is a schematic diagram of S311 included in S310 in FIG. 10, and FIG. 12 is a schematic diagram of S321 included in S320 in FIG. 10. In some embodiments, S310 includes S311, which is described in detail as follows. At S311, a reader function of the payment collection device 3 is enabled and the trigger signal is sent. Correspondingly, S320 includes S321, which is described in detail as follows. At S321, the response signal is received, and the reader function of the payment collection device 3 is disabled and the card emulation function of the payment collection device 3 is enabled, according to the response signal, thereby causing the payment collection device 3 to enter the card emulation mode.

In the embodiments, the reader function of the payment collection device 3 is enabled, so that the payment collection device 3 enters the reader mode and sends the trigger signal. The trigger signal is a non-standard NFC command. The trigger signal is a user-defined command, and the trigger signal may be one byte or multiple bytes. For example, the trigger signal may be, but is not limited to, 0xA5, as long as the trigger signal is different from standard NFC commands. The trigger signal may be implemented by an independent NFC chip in the payment collection device 3, or by an integrated chip in the payment collection device 3 that supports both the reader function and the tag function, which is not limited in the disclosure.

The response signal is received, and the reader function of the payment collection device 3 is disabled and the card emulation function is enabled according to the response signal. In other words, in response to receiving the response signal, the payment collection device 3 is switched from the reader mode to the card emulation mode according to the received response signal.

In some embodiments, the trigger signal may be, but is not limited to, 0xA5, and the response signal may be, but is not limited to, 0x05.

In the payment collection method provided in the embodiments of the disclosure, the reader function of the payment collection device 3 is enabled and the trigger signal is sent to the electronic device 1 being in the screen-off state and the card emulation mode, where the trigger signal is configured to control the electronic device 1 to enter the screen-on mode and the reader mode; the response signal fed back by the electronic device 1 in the screen-on mode and the card emulation mode according to the trigger signal is received, where the response signal is configured to disable the reader function and enable the card emulation function of the payment collection device 3, thereby causing the payment collection device 3 to enter the card emulation mode; and the payment collection device 3 in the card emulation mode receives the polling signal from the electronic device 1 and feeds back the tag information, where the tag information is configured to control the electronic device 1 to invoke the payment application to process the payment. It can be seen that, through the payment collection method provided by the embodiments of the disclosure, the payment problem of the related art that troubles users when the electronic device 1 is in the screen-off state can be alleviated, which reduces the inconvenience of making payments with the electronic device 1.

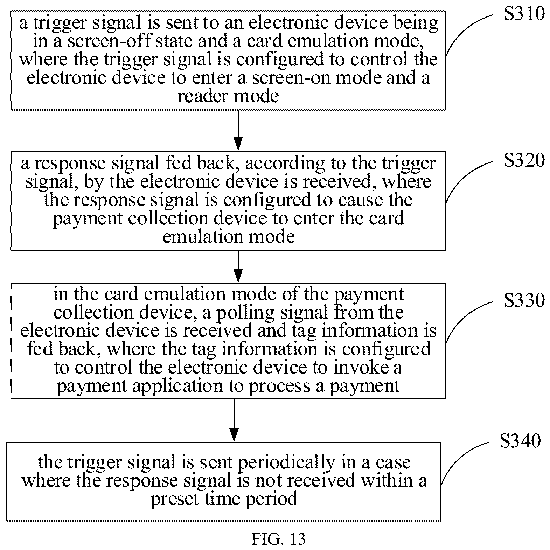

Referring to FIG. 13, FIG. 13 is a flowchart of the payment collection method according to some other embodiments of the disclosure. In addition to S310, S320 and S330, the payment collection method further includes S340. For S310, S320 and S330, the reference may be made to the above description and will not be repeated herein, and S340 is described in detail as follows.

At S340, the trigger signal is sent periodically in a case where the response signal is not received within a preset time period.

Specifically, when the payment collection device 3 does not receive a response signal within the preset time period, the payment collection device 3 determines that the electronic device 1 has moved away from the payment collection device 3. The payment collection device 3 enables the reader function (also referred to as the NFC reader function) again, the payment collection device 3 periodically enters the reader mode and sends the trigger signal in the reader mode. The payment collection device 3 is in the reader mode after the reader function is enabled. The trigger signal is sent periodically when no response signal is received within the preset time period. In other words, the payment collection device 3 is periodically in the reader mode and sends the trigger signal in the reader mode, in response to no response signal being received within the preset time period.

The preset time period may be, but is not limited to, 1 second (s) or 2 seconds, which is not limited in the disclosure.

The payment collection method further includes S340. At S340, the trigger signal is periodically sent when the response signal is not received within the preset time period. This enables a next electronic device 1 in the screen-off state to interact with the payment collection device 3, thereby enabling the electronic device 1 to process a payment to the payment collection device 3.

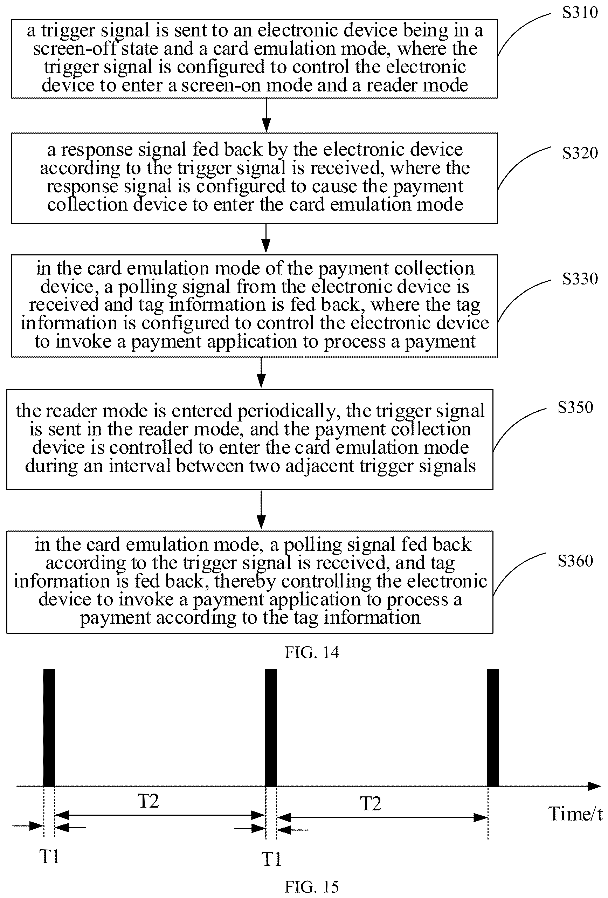

Referring to FIGS. 14 and 15, FIG. 14 is a flowchart of the payment collection method according to yet other embodiments of the disclosure, and FIG. 15 is a schematic diagram illustrating a state of the payment collection device in the payment collection method according to some embodiments. In addition to S310, S320 and S330, the payment collection method further includes S350 and S360, which are described in detail as follows.

At S350, the reader mode is entered periodically, the trigger signal is sent in the reader mode, and the payment collection device 3 is controlled to enter the card emulation mode during an interval between two adjacent trigger signals.

Specifically, the operating time of the payment collection device 3 includes multiple first time periods T1 and multiple second time periods T2, which are arranged at intervals. Two adjacent first time periods T1 are separated by one second time period T2. The payment collection device 3 is in the reader mode during the first time period T1, and in the card emulation mode during the second time period T2. During the first time period T1, the payment collection device 3 is in the reader mode and sends the trigger signal.

At S360, in the card emulation mode, a polling signal fed back according to the trigger signal is received, and tag information is fed back, thereby controlling the electronic device 1 to invoke a payment application to process a payment according to the tag information.

The payment collection device 3 is in the card emulation mode during the interval between two adjacent trigger signals. The payment collection device 3 in the card emulation mode may receive the polling signal sent by the electronic device 1, in which the polling signal is a standard NFC command. For example, when a user brings the electronic device 1 in the screen-on and unlocked state close to the payment collection device 3, the payment collection device 3 sends the tag information in response to receiving the polling signal, so that the electronic device 1 invokes the payment application to process a payment based on the tag information.

In the payment collection method provided in the embodiments of the disclosure, the payment collection device periodically enters the reader mode and sends the trigger signal in the reader mode, and the payment collection device 3 is controlled to enter the card emulation mode during the interval between two adjacent trigger signals. When the card emulation mode is enabled, in response to receiving the polling signal fed back according to the trigger signal, the payment collection device feeds back the tag information, so as to control the electronic device 1 to invoke the payment application for payment according to the tag information. This achieves the technical effect of communication between the payment collection device 3 and the electronic device 1 and convenient payment collection for the payment collection device 3.

Some embodiments of the disclosure provide a payment collection device 3, which is configured to implement the payment collection method according to the above embodiments. Correspondingly, the payment collection method provided in the foregoing embodiments is executed by the payment collection device 3 provided in the embodiments of the disclosure.

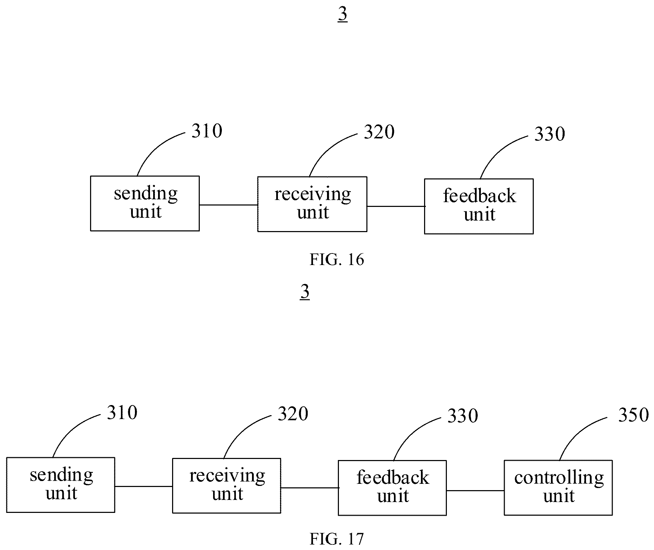

Referring to FIG. 16, FIG. 16 is a schematic diagram of a payment collection device 3 according to some embodiments of the disclosure. The payment collection device 3 includes a sending unit 310, a receiving unit 320 and a feedback unit 330. The sending module 310 is configured to send a trigger signal to an electronic device being in a screen-off state and a card emulation mode, where the trigger signal is configured to control the electronic device 1 to enter a screen-on mode and a reader mode. The receiving unit 320 is configured to receive a response signal fed back, according to the trigger signal, by the electronic device 1, where the response signal is configured to cause the payment collection device 3 to enter a card emulation mode. The feedback unit 330 is configured to receive a polling signal from the electronic device 1 and feed back tag information, in the card emulation mode of the payment collection device, where the tag information is configured to control the electronic device 1 to invoke a payment application to process a payment.

The sending unit 310 is configured to send the trigger signal when the payment collection device 3 is in the reader mode. The trigger signal is a non-standard NFC command. The trigger signal is a user-defined command, and the trigger signal may be one byte or multiple bytes. For example, the trigger signal may be, but is not limited to, 0xA5, as long as the trigger signal is different from standard NFC commands.

When the electronic device 1 is in the screen-off mode, the electronic device 1 is also in the card emulation mode. Since the electronic device 1 is in the card emulation mode and the payment collection device 3 is in the reader mode, the sending unit 310 of the payment collection device 3 may send the trigger signal and the electronic device 1 may receive the trigger signal.

The sending unit 310 may be an independent NFC chip in the payment collection device 3, or an integrated chip in the payment collection device 3 that supports both the reader function and the tag function, which is not limited in the disclosure.

When the electronic device 1 interacts with the payment collection device 3 to process a payment to the payment collection device 3, a distance between the electronic device 1 and the payment collection device 3 is less than or equal to a preset distance. For example, the preset distance may be, but is not limited to, 20 centimeters. In some embodiments, when the distance between the electronic device 1 and the payment collection device 3 is less than or equal to the preset distance, the electronic device 1 can receive the trigger signal sent by the payment collection device 3.

In some embodiments, the distance between the electronic device 1 and the payment collection device 3 is zero. For example, when the electronic device 1 is close to the payment collection device 3 and makes contact with the payment collection device 3, the distance between the electronic device 1 and the payment collection device 3 is zero. Regarding the electronic device 1 being close to the payment collection device 3 and making contact with the payment collection device 3, it is also referred to as a touching operation or a tap-to-pay operation between the electronic device 1 and the payment collection device 3.

In the embodiments, when the electronic device 1 is in the screen-off mode, the electronic device 1 is in the card emulation mode. In response to receiving the trigger signal, the electronic device 1 is controlled, according to the trigger signal, to switch from the screen-off mode to the screen-on mode, and switch from the card emulation mode to the reader mode. When the electronic device 1 is in the reader mode, the electronic device 1 sends the response signal according to the trigger signal. The receiving unit 320 of the payment collection device 3 is configured to receive the response signal fed back by the electronic device 1 according to the trigger signal, and the response signal is configured to enable the card emulation mode of the payment collection device 3.

When the electronic device 1 is in the reader mode and the payment collection device 3 is in the card emulation mode, the electronic device 1 may communicate with the payment collection device 3, and the electronic device 1 may process a payment according to the tag information of the payment collection device 3.

In some embodiments, the trigger signal may be, but is not limited to, 0xA5, and the response signal may be, but is not limited to, 0x05.

When the electronic device 1 is in the screen-on mode and the reader mode, the electronic device 1 sends the polling signal. Correspondingly, when the payment collection device 3 is in the card emulation mode, the feedback unit 330 is configured to receive the polling signal from the electronic device 1, and feed back the tag information. The polling signal is an NFC standard command. The polling signal is configured to read the tag information of the payment collection device 3, in which the tag information includes an instruction for invoking a payment application, and information such as an amount to be paid.

The tag information is configured to control the electronic device 1 to invoke the payment application for payment. In other words, in response to reading the tag information, the electronic device 1 invokes the payment application according to the tag information, and processes a payment according to the payment amount and other information carried in the tag information.

Based on the above, in the payment collection device 3 provided by the embodiments of the disclosure, the sending unit 310 is configured to send the trigger signal to the electronic device 1 that is in the screen-off state and the card emulation mode, where the trigger signal is configured to control the electronic device 1 to enter the screen-on mode and the reader mode; the receiving unit 320 is configured to receive the response signal fed back, according to the trigger signal, by the electronic device 1 being in the screen-on mode and reader mode, where the response signal is configured to cause the payment collection device 3 to enter the card emulation mode; and when the payment collection device 3 in the card emulation mode, the feedback unit 330 is configured to receive the polling signal from the electronic device 1 and feed back the tag information, where the tag information is configured to control the electronic device 1 to invoke the payment application for making a payment. It can be seen that, through the payment collection device 3 provided by the embodiments of the disclosure, the payment problem of the related art that troubles users when the electronic device 1 is in the screen-off state can be alleviated, which reduces the inconvenience of making payments with the electronic device 1.

Further, in some embodiments, the sending unit 310 is specifically configured to enable a reader function of the payment collection device 3, and send the trigger signal. Correspondingly, the receiving unit 320 is specifically configured to receive the response signal, disable the reader function of the payment collection device 3 and enable a card emulation function 3 of the payment collection device, according to the response signal, thereby causing the payment collection device 3 to enter the card emulation mode.

In the embodiments, the sending module 120 is configured to enable the reader function of the payment collection device 3 to cause the payment collection device 3 to enter the reader mode, and the sending module 120 is further configured to send the trigger signal. The trigger signal is a non-standard NFC command. The trigger signal is a user-defined command, and the trigger signal may be one byte or multiple bytes. For example, the trigger signal may be, but is not limited to, 0xA5, as long as the trigger signal is different from standard NFC commands. The trigger signal may be implemented by an independent NFC chip in the payment collection device 3, or by an integrated chip in the payment collection device 3 that supports both the reader function and the tag function, which is not limited in the disclosure.

The receiving unit 320 is configured to receive the response signal, disable the reader function of the payment collection device 3 and enable the card emulation function according to the response signal. In other words, the receiving unit 320 is configured to receive the response signal, and switch the payment collection device 3 from the reader mode to the card emulation mode according to the received response signal.

In some embodiments, the trigger signal may be, but is not limited to, 0xA5, and the response signal may be, but is not limited to, 0x05.

In the payment collection device 3 provided in the embodiments of the disclosure, the sending unit 310 is configured to enable the reader function of the payment collection device 3, and send the trigger signal to the electronic device 1 being in the screen-off state and the card emulation mode, where the trigger signal is configured to control the electronic device 1 to enter the screen-on mode and the reader mode; the receiving unit 320 is configured to receive the response signal fed back by the electronic device 1 in the screen-on mode and the card emulation mode according to the trigger signal, where the response signal is configured to disable the reader function and enable the card emulation function of the payment collection device 3, thereby causing the device to enter the card emulation mode; and the payment collection device 3 in the card emulation mode receives the polling signal from the electronic device 1 and feeds back the tag information, where the tag information is configured to control the electronic device 1 to invoke the payment application to process the payment. It can be seen that, through the payment collection method provided by the embodiments of the disclosure, the payment problem of the related art that troubles users when the electronic device 1 is in the screen-off state can be alleviated, which reduces the inconvenience of making payments with the electronic device 1.

Furthermore, in some embodiments, the sending unit 310 is further configured to send the trigger signal periodically, in a case where the response signal is not received within a preset time period.

Specifically, when the receiving unit 320 of the payment collection device 3 receives no response signal within the preset time period, it is determined that the electronic device 1 has moved away from the payment collection device 3. The sending unit 310 of the payment collection device 3 enables the reader function (also referred to as the NFC reader function) again, periodically enters the reader mode and sends the trigger signal in the reader mode. The payment collection device 3 is in the reader mode after the reader function is enabled. The sending unit 310 is configured to send the trigger signal periodically when the receiving unit 320 does not receive the response signal within the preset time period. In other words, when the receiving unit 320 does not receive the response signal within the preset time period, the sending unit 310 periodically enables the reader mode of the payment collection device 3, and sends the trigger signal in the reader mode.

The preset time period may be, but is not limited to, 1 second (s) or 2 seconds, which is not limited in the disclosure.

The sending unit 310 of the payment collection device 3 is further configured to send the trigger signal periodically when the response signal is not received within the preset time period, so that a next electronic device 1 in the screen-off state may interact with the payment collection device 3 to process a payment to the payment collection device 3.

Referring to FIG. 17, FIG. 17 is a schematic diagram of the payment collection device 3 according to some other embodiments of the disclosure. In the embodiments, the electronic device 3 further includes a controlling unit 350. The controlling unit 350 is configured to control the payment collection device 3 to periodically enter the reader mode, control the sending unit 310 to send the trigger signal when the payment collection device 3 enters the reader mode, and control the payment collection device 3 to enter the card emulation mode during an interval between two adjacent trigger signals. The feedback unit 330 is further configured to receive, in the card emulation mode, a polling signal fed back according to the trigger signal, and feed back tag information, thereby controlling the electronic device 1 to invoke the payment application to process the payment according to the tag information.

During the interval between two adjacent trigger signals, the controlling unit 350 is configured to control the payment collection device 3 to enter the card emulation mode. The receiving unit 320 of the payment collection device 3 in the card emulation mode may receive the polling signal sent by the electronic device 1, where the polling signal is a standard NFC command. For example, when a user brings the electronic device 1 in the screen-on and unlocked state close to the payment collection device 3, the receiving unit 320 of the payment collection device 3 sends the tag information in response to receiving the polling signal, so that the electronic device 1 invokes the payment application for process a payment according to the tag information.

In the payment collection device 3 provided in the embodiments of the disclosure, the controlling unit 350 is configured to: control the payment collection device 3 to periodically enter the reader mode, control the sending unit 310 to send the trigger signal when the payment collection device 3 is in the reader mode, and control the payment collection device 3 to enter the card emulation mode during the interval between two adjacent trigger signals. When the card emulation mode is enabled, the feedback unit 330 is configured to feed back the tag information in response to receiving the polling signal fed back according to the trigger signal, so as to control the electronic device 1 to invoke the payment application for payment according to the tag information. This achieves the technical effect of communication between the payment collection device 3 and the electronic device 1 and convenient payment collection for the payment collection device 3.

Furthermore, the embodiments of the disclosure further provide a computer-readable medium. The computer-readable medium is configured to store a computer program which, when being executed, cause the above payment collection method according to any one of the above-mentioned embodiments to be implemented.

The computer-readable medium may be, but is not limited to, a USB flash drive, a Read-Only Memory (ROM), a Random Access Memory (RAM), a mobile hard disk, a magnetic disk or an optical disk and other various media that can store program codes.

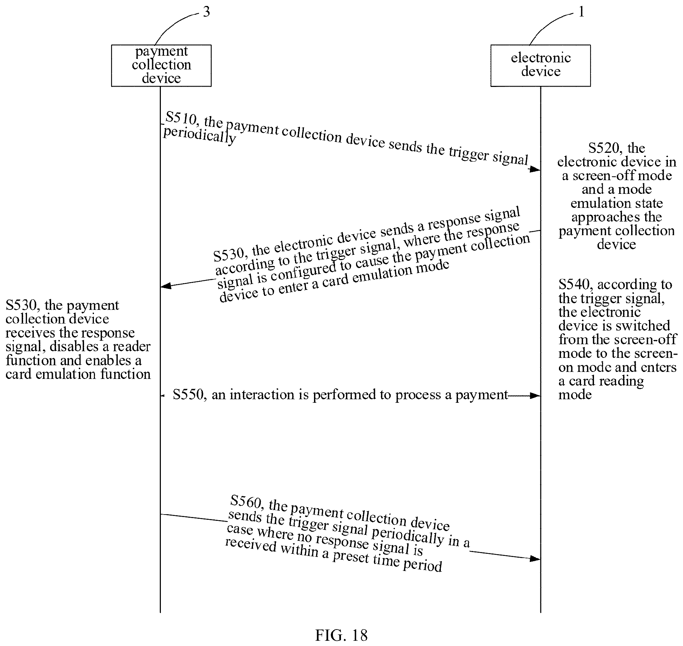

Referring to FIG. 18, FIG. 18 is a schematic flowchart illustrating interaction between a payment collection device and an electronic device according to some embodiment of the disclosure.

At S510, the payment collection device 3 sends the trigger signal periodically.

At S520, the electronic device 1 in a screen-off mode and a card emulation mode approaches the payment collection device 3. In some embodiments, when a distance between the electronic device 1 and the payment collection device 3 is less than or equal to a preset distance, the electronic device 1 approaches the payment collection device 3. For example, the preset distance may be, but is not limited to, 20 centimeters.

At S530, the payment collection device 3 receives a response signal, disables a reader function and enables a card emulation function.

Specifically, the electronic device 1 sends the response signal to the payment collection device 3 according to the trigger signal, thereby causing the payment collection device 3 to enter the card emulation mode according to the response signal. At S540, according to the trigger signal, the electronic device 1 is switched from the screen-off mode to the screen-on mode and enters a reader mode.

At S550, an interaction is performed to complete a payment.

Specifically, after a screen of the electronic device 1 is unlocked, the electronic device 1 sends a polling signal to read tag information of the payment collection device 3. The polling signal is an NFC standard command. The polling signal is configured to read the tag information of the payment collection device 3, in which the tag information includes an instruction for invoking a payment application, and information such as an amount to be paid.

The payment collection device 3 sends the tag information to the electronic device 1, and the electronic device 1 receives the tag information, invokes a payment application, obtain an amount to be paid, and completes the payment.

At S560, the payment collection device 3 sends the trigger signal periodically in a case where no response signal is received within a preset time period.

It can be seen that in the embodiments, the payment collection device 3 sends the trigger signal periodically to interact with the electronic device 1. When the electronic device 1 in the screen-off state receives the trigger signal from the payment collection device 3, the electronic device 1 sends the response signal to the payment collection device 3 in response to the trigger signal. The payment collection device 3 enables the card emulation mode in response to the response signal. The electronic device 1 enables the reader mode in response to the trigger signal. In this way, the electronic device 1 and the payment collection device 3 can communicate with each other. After the screen of the electronic device 1 is unlocked, the electronic device 1 sends the polling signal. The payment collection device 3 sends the tag information to the electronic device 1 in response to receiving the polling signal. When the electronic device 1 receives the tag information, the electronic device 1 invokes the payment application and processes the payment according to the payment information included in the tag information. Based on the above, according to the embodiments of the disclosure, the payment collection device 3 and the electronic device 1 interacts with each other, the payment problem of the related art that troubles users in the screen-off state of the electronic device 1 can be alleviated, which reduces the inconvenience of making payments with the electronic device 1.

Further, the embodiments of the present disclosure further provide an electronic device. The electronic device includes a processor and a memory commutating with each other. The memory stores therein program codes which, when being executed by the processor, cause the processor to implement the payment method according to any one of the previous embodiments. Further, the embodiments of the present disclosure further provide a payment collection device, which also includes a processor and a memory communicating with each other. The memory of the payment collection device stores therein program codes which, when being executed by the processor of the payment collection device, cause the processor to implement the payment collection method according to any one of the previous embodiments. It is notable that, in some embodiments, the electronic device is also capable of implementing the payment collection method according to any one of the previous embodiments, and the payment collection device shown is also capable of implementing the payment method according to any one of the previous embodiments.

It is notable that, for brief description, the foregoing method embodiments are represented by a series of actions. However, since some operations may be performed in other orders or simultaneously, a person skilled in the art should be aware that the disclosure is not limited by the described order of the actions. In addition, a person skilled in the art should also be aware that embodiments described in the specification are exemplary embodiments, and the involved actions and modules are not necessarily required by the disclosure.

The descriptions of the various embodiments have respective focuses. For a part not described in detail in an embodiment, reference may be made to related descriptions of other embodiments.

It should be understood that, in the various embodiments provided by the disclosure, the disclosed apparatus may be implemented in other manners. For example, the apparatus embodiments described above are merely illustrative. For instance, the division of the units is merely a logical functional division, and there may be other division manners in actual implementation, for example, multiple units or components may be combined or integrated into another system, or some features may be ignored or not executed. In addition, the mutual coupling, direct coupling or communication connection shown or discussed may be an indirect coupling or communication connection through some interfaces, devices, or units, which may be electrical, mechanical, or in other forms.

The units described as separate components may be or may not be physically separate, and the parts represented as units may or may not be physical units. That is, the units may be located in one place or distributed over multiple network units. Some or all of the units may be selected according to actual needs to achieve the objectives of the solutions of the embodiments.

In addition, the functional units in the various embodiments of the disclosure may be integrated into one processing unit, or each unit may exist alone physically, or two or more units may be integrated into one unit. The above-mentioned integrated units may be implemented either in the form of hardware or in the form of software functional units.

When the integrated unit is implemented in the form of a software functional unit and sold or used as an independent product, it may be stored in a computer-readable memory. Based on such understanding, the technical solutions of the disclosure essentially, or the part contributing to the related art, or all or some of the technical solutions may be implemented in the form of a software product. The computer software product is stored in a memory and includes several instructions for instructing a computer device (which may be a personal computer, a server, or a network device) to perform all or some of the operations of the methods described in the embodiments of the disclosure. The memory includes any medium that can store program codes, such as a USB flash drive, a ROM, a RAM, a mobile hard disk, a magnetic disk, or an optical disc.

A person of ordinary skill in the art can understand that all or part of the operations of the various methods in the above embodiments may be implemented by instructing relevant hardware through a program. The program may be stored in a computer-readable memory. The memory may include a flash drive, a ROM, a RAM, a magnetic disk, or an optical disk.

The above description is only specific implementations of the disclosure, but the protection scope of the disclosure is not limited thereto. A person of ordinary skill in the art can easily conceive of various equivalent modifications or substitutions within the technical scope disclosed by the disclosure, and these modifications or substitutions shall all fall within the protection scope of the disclosure. Therefore, the protection scope of the disclosure shall be subject to the protection scope of the claims.

## Claims

1. A payment method, implemented by an electronic device (1), the method comprising:
in a screen-off mode of the electronic device (1), receiving (S110) a trigger signal sent by a payment collection device (3);
sending (S120) a response signal to the payment collection device (3) according to the trigger signal, wherein the response signal is configured to cause the payment collection device (3) to enter a card emulation mode;
switching (S130), according to the trigger signal, from the screen-off mode to a screen-on mode and enter a reader mode;
sending (S140) a polling signal to read tag information of the payment collection device (3); and
invoking (S150) a payment application to process a payment, according to the tag information.

2. The payment method as claimed in claim 1, wherein after switching (S130), according to the trigger signal, from the screen-off mode to the screen-on mode and enter the reader mode, and before sending (S140) the polling signal to read the tag information of the payment collection device (3), the payment method further comprises:
determining (S11) whether a preset payment mode is enabled in the electronic device (1), wherein the preset payment mode is a payment mode in which the payment is capable of being processed without entering a payment password when a current payment amount to be paid is less than or equal to a preset amount; and
in a case where the preset payment mode is not enabled in the electronic device (1), displaying (S12) an unlock interface in the screen-on mode; and
collecting (S13) current unlock information input on the unlock interface, and unlocking a screen of the electronic device (1) when the current unlock information matches preset unlock information.

3. The payment method as claimed in claim 2, further comprising:
in a case where the preset payment mode is enabled in the electronic device (1), determining (S14), according to the tag information, the current payment amount to be paid; and
upon determining that the current payment amount is less than or equal to the preset amount, forbidding (S15) displaying the unlock interface.

4. The payment method as claimed in claim 3, further comprising:
upon determining that the current payment amount is greater than the preset amount, displaying (S16) the unlock interface in the screen-on mode.

5. The payment method as claimed in claim 3, further comprising:
upon determining that the current payment amount is less than or equal to the preset amount, after invoking (S150), according to the tag information, the payment application to process the payment in the preset payment mode, displaying (S17) a payment result in a screen-on state.

6. The payment method as claimed in claim 2, further comprising:
in a case where the unlock interface is a password unlock interface, determining that the current unlock information matches the preset unlock information when each symbol in the current unlock information is the same as a corresponding symbol in the preset unlock information; or
in a case where the unlock interface is a biometric information unlock interface, determining that the current unlock information matches the preset unlock information when a matching degree between the current unlock information and the preset unlock information is greater than or equal to a preset matching degree.

7. The payment method as claimed in claim 1, wherein receiving (S110) the trigger signal sent by the payment collection device (3), comprises:
in a case where a distance between the electronic device (1) and the payment collection device (3) is less than or equal to a preset distance, receiving the trigger signal sent by the payment collection device (3).

8. The payment method as claimed in claim 1, wherein the electronic device (1) is a device supporting near field communication, NFC, communication, the trigger signal is a non-standard NFC command, and the polling signal is an NFC standard command.

9. The payment method as claimed in claim 1, wherein the electronic device is a device supporting near field communication (NFC) communication, the trigger signal is a non-standard NFC command, and the polling signal is an NFC standard command.

10. A payment collection method, implemented by a payment collection device (3), the method comprising:
sending (S310) a trigger signal to an electronic device (1) being in a screen-off state and a card emulation mode, wherein the trigger signal is configured to control the electronic device (1) to enter a screen-on mode and a reader mode;
receiving (S320) a response signal fed back, according to the trigger signal, by the electronic device (1), wherein the response signal is configured to cause the payment collection device (3) to enter the card emulation mode; and
in the card emulation mode of the payment collection device (3), receiving (S330) a polling signal from the electronic device (1) and feeding back tag information, wherein the tag information is configured to control the electronic device (1) to invoke a payment application to process a payment.

11. The payment collection method as claimed in claim 10, wherein sending (S310) the trigger signal comprises: enabling (S311) a reader function of the payment collection device (3), and sending the trigger signal; and
wherein receiving (S320) the response signal fed back, according to the trigger signal, by the electronic device (1), the response signal being configured to cause the payment collection device (3) to enter the card emulation mode, comprises: receiving (S321) the response signal, and according to the response signal, entering the card emulation mode of the payment collection device (3) by disabling the reader function of the payment collection device (3) and enabling a card emulation function of the payment collection device (3).

12. The payment collection method as claimed in claim 11, further comprising:
in a case where the response signal is not received within a preset time period, sending (S340) the trigger signal periodically.

13. The payment collection method as claimed in claim 10, further comprising:
periodically entering (S350) the reader mode and sending the trigger signal in the reader mode, and entering the card emulation mode of the payment collection device (3) during an interval between two adjacent trigger signals; and
in the card emulation mode, upon receiving the polling signal fed back according to the trigger signal, feeding (S360) back the tag information, thereby controlling the electronic device (1) to invoke the payment application to process the payment according to the tag information.

14. An electronic device (1), comprising a processor and a memory communicating with each other, wherein the memory is configured to store therein program instructions which, when being executed by the processor, cause the processor to implement the payment method as claimed in any one of claims 1 to 9.

15. A payment collection device (3), comprising a processor and a memory communicating with each other, wherein the memory is configured to store therein program instructions which, when being executed by the processor, cause the processor to implement the payment method as claimed in any one of claims 10 to 13.
